# EUROPÄISCHE PATENTSCHRIFT

(11) **EP 1 740 907 B1**
(45) Veröffentlichungstag und Bekanntmachung des Hinweises auf die Patenterteilung: **16.11.2011**
(21) Anmeldenummer: 05707008.8
(22) Anmeldetag: 26.01.2005
(51) Int. Cl.: G01C 19/56, B60T 8/88

(54) **VERFAHREN ZUM BETRIEB EINES SENSORS**
METHOD FOR OPERATING A SENSOR
PROCEDE DE FONCTIONNEMENT D'UN DETECTEUR

(30) Priorität: 16.04.2004 DE 102004018623
(43) Veröffentlichungstag der Anmeldung: 10.01.2007
(73) Patentinhaber: WABCO GmbH, 30453 Hannover (DE)
(72) Erfinder: BOLZMANN, Oliver, 30161 Hannover (DE); KÜSTER, Klaus, 30355 Hannover (DE)
(74) Vertreter: Günther, Constantin
(86) Internationale Anmeldenummer: PCT/EP2005/000727
(87) Internationale Veröffentlichungsnummer: WO 2005/108925

(56) Entgegenhaltungen:
- DE-A1-102004 014 914
- DE-C1- 10 128 056
- US-B1- 6 498 996
- PATENT ABSTRACTS OF JAPAN Bd. 2000, Nr. 20, 10. Juli 2001 (2001-07-10) & JP 2001 065403 A (DENSO CORP), 16. März 2001 (2001-03-16)
- PATENT ABSTRACTS OF JAPAN Bd. 015, Nr. 393 (M-1165), 4. Oktober 1991 (1991-10-04) & JP 03 159877 A (NIPPONDENSO CO LTD), 9. Juli 1991 (1991-07-09)

## Beschreibung

Die Erfindung bezieht sich auf ein Verfahren zum Betrieb eines Sensors gemäß dem Oberbegriff des Patentanspruchs 1.

Derartige Sensoren, insbesondere Drehratensensoren, können zweckmäßig in einem Gehäuse zusammen mit einer zugehörigen Auswerteelektronik eingebaut werden. Die Sensoren können dabei zusammen mit der übrigen Elektronik auf derselben Platine befestigt sein oder eine eigene Platine (Babyboard) aufweisen. Drehratensensoren werden z. B. in Fahrdynamik-Regelungen (FDR), Abstandsregelungen (ACC) und Rollover-Regelungen (RSC) verwendet. Ein Drehratensensor erkennt eine Rotation um die senkrechte Achse des Fahrzeugs. Hierzu ist innerhalb des Sensors ein schwingendes Element, z. B. eine Stimmgabel oder ein andersartig ausgebildeter Schwingkörper angeordnet. Dieser wird in Schwingungen versetzt und eine durch die Corioliskraft bedingte Auslenkung bei einer Rotation um eine senkrechte Achse erfasst. Bekannte Drehratensensoren (WO 03/067190 A1,

DE 102 15 853 A1, DE 44 973 C2) sind meist mikromechanisch hergestellt und sind deshalb empfindlich gegenüber Erschütterungen und anderen mechanischen Vibrationen. Derartige Störungen können Messwertverfälschungen bis hin zur Zerstörung des Sensors verursachen.

Die genannten Messwertverfälschungen sind bei den oben angeführten Anwendungen in Kraftfahrzeugen als besonders kritisch anzusehen, da hierdurch falsche Regelsignale erzeugt werden können und somit eine Gefährdung von Fahrzeug und Fahrer verursacht werden kann. Die Regelsignale entsprechen dann nicht dem wahren Fahrzeugverhalten. Darüber hinaus sind sie für das Regelsystem von einer tatsächlichen Drehrate nicht in allen Fällen zu unterscheiden.

Zur Abhilfe ist es bekannt (DE 100 22 968 A1), die Platine, auf welcher der Sensor montiert ist, speziell federnd und gedämpft auszubilden. Dies bedeutet jedoch eine erhebliche Verteuerung der Elektronik. Weiterhin sind solche Dämpfungseinrichtungen technologisch schwierig zu beherrschen, da sich die Federung und die Dämpfung durch Alterung mit der Zeit verändern können.

Wie sich in Versuchen herausgestellt hat, sind insbesondere Vibrationen eines bestimmten Frequenzbereiches, nämlich solche zwischen 300 und 450 Hz verantwortlich für gestörte Ausgangssignale von Drehratensensoren. Diese können ab einem bestimmten Schwingungs-Level zur DC-Offset-Drift des Ausgangssignals führen.

Denkbar ist natürlich auch, qualitativ besonders hochwertige Drehratensensoren zu verwenden, die unempfindlich gegen Vibrationen und Stöße sind. Wegen des hohen Preises solcher Sensoren ist allerdings ihre Verwendung als Massenbauteil in Kraftfahrzeugen unzweckmäßig.

Der Erfindung liegt die Aufgabe zugrunde, fehlerhafte Ausgangssignale von Drehratensensoren zu vermeiden bzw. eine schädliche Auswirkung solcher fehlerhafter Signale auf eine Fahrdynamikregelung oder andere Fahrzeugsysteme zu verhindern.

Diese Aufgabe wird durch die im Patentanspruch 1 enthaltene Erfindung gelöst. Die abhängigen Ansprüche enthalten zweckmäßige Weiterbildungen.

Durch die Anwendung des erfindungsgemäßen Verfahrens können erheblich kostengünstigere Drehraten-Sensoren als bisher verwendet werden. Hieraus ergibt sich eine beträchtliche Kostensenkung des FDR-Systems. Dies gilt auch bei Berücksichtigung der Kostenerhöhung durch die zusätzlichen Beschleunigungs-Sensoren.

Ferner kann auf aufwendige Maßnahmen zur Schwingungsdämpfung der Platine verzichtet werden, und es können kostengünstige Materialien für das Gehäuse, z.B. Kunststoff, eingesetzt werden.

Die Erfindung wird im Folgenden anhand einer Zeichnung näher erläutert.

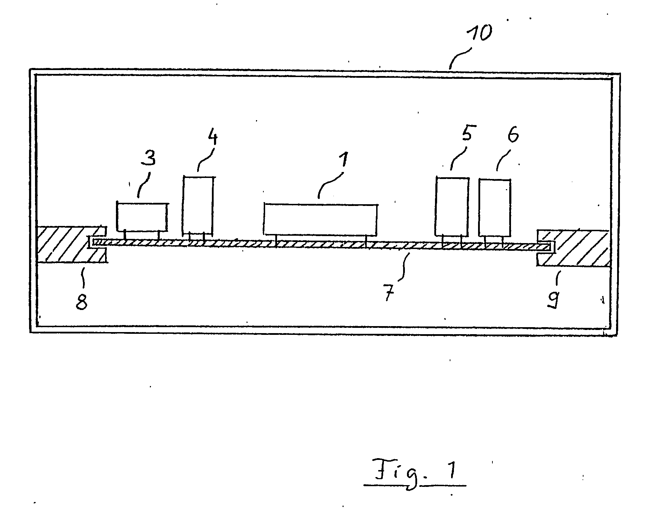

Die einzige Fig. 1 zeigt in schematischer Darstellung eine in einem Gehäuse eingebaute Elektronik, die neben anderen Bauteilen einen Drehratensensor enthält.

Fig. 1 zeigt eine Platine (7), auf der verschiedene elektronische Bauteile (1,3,4,5,6) aufgelötet sind. Die Platine (7) wird mit Halterungen (8, 9) innerhalb eines Elektronik-Gehäuses (10) fixiert. Das Elektronik-Gehäuse (10) kann z. B. eine Fahrdynamikregelung (FDR) enthalten und an Bord eines Kraftfahrzeuges angeordnet sein.

Die Platine (7) weist eine Elektronik (3) auf, welche unter anderem die Ausgangssignale eines Sensors (1), insbesondere eines Drehratensensors, empfängt und auswertet. Das Bauteil (Elektronik)(3) steht dabei stellvertretend für weitere, nicht im Einzelnen eingezeichnete elektronische Bauteile der Fahrdynamik-Regelung.

Zur Ausführung des erfindungsgemäßen Verfahrens sind in unmittelbarer Nähe des Drehratensensors (1) ein oder mehrere, hier drei, Beschleunigungssensoren (4,5,6) angeordnet. Vorteilhaft sind diese Beschleunigungssensoren so gewählt, dass sie verschiedene Bandbreiten bzw. Frequenzen von Schwingungen messen können und/oder verschiedene Messrichtungen aufweisen.

Um alle auftretenden Schwingungen sicher zu erfassen, können dabei vorteilhaft drei Beschleunigungssensoren (4,5,6), die zur Messung in drei verschiedenen räumlichen Achsen vorgesehen sind, verwendet werden.

Der Sensor (1) (Drehratensensor) kann auch mit den Beschleunigungssensoren (4,5,6) auf einer besonderen Platine (Babyboard) montiert sein (nicht dargestellt). Dies hat den Vorteil, dass der Drehratensensor mit den Beschleunigungssensoren als eigenes Modul vorgefertigt werden kann.

Zweckmäßig können zusätzlich das Gehäuse (10) und/oder die Platine (7) so ausgebildet sein, dass sie fern von kritischen mechanischen Sensoranregungen bzw. Vibrationen liegen. Der Drehratensensor (1) wird dann vorteilhaft an eine solche Stelle platziert, welche fern von maximalen Schwingungsamplituden liegt. Eine solche geeignete Stelle kann z.B. durch Versuche ermittelt werden.

Zweckmäßig können zusätzlich weiter die Halterungen (8, 9) der Platine (7) schwingungsdämpfend ausgebildet sein. Durch diese Maßnahme werden die auf den Drehratensensor (1) übertragenen schädlichen Schwingungen weiter vermindert.

Das Gehäuse (10) und/oder die Platine (7) können auch mechanisch so ausgebildet sein, dass bei einer Schwingungs-Anregung von außen nur wenige, eng abgegrenzte Resonanzbereiche auftreten. Maßnahmen hierzu sind dem Fachmann bekannt. Der Drehratensensor wird dann auf eine Stelle platziert, wo kein Resonanzbereich auftritt. Diese kann durch Versuche ermittelt werden.

Die erfindungsgemäß durch die Beschleunigungssensoren (4,5,6) gemessenen bzw. erkannten Vibrationen werden innerhalb der Elektronik (3) ausgewertet. Sollten diese Vibrationen eine festgelegte Stärke überschreiten und innerhalb eines bestimmten, kritischen Frequenzbandes, hier etwa von 300 bis 450 Hz, auftreten, so verhindert die Elektronik (3) durch geeignete Maßnahmen, z.B. durch eine Deaktivierung von nachgeschalteten Funktionen, dass gestörte Ausgangssignale weitergeleitet werden und so zu falschen Fahrzeug-Reaktionen führen können.

Durch die Anwendung der Erfindung ergibt sich eine erhebliche sicherheitslässige Verbesserung von FDR- oder anderen Systemen bei gleichzeitiger Kostenreduzierung.

## Patentansprüche

1. Verfahren zum Betrieb eines Sensors (1), insbesondere Drehratensensors, der in einem Gehäuse (10) auf einer Platine (7) eingebaut ist, **dadurch gekennzeichnet, dass** mechanische Vibrationen am Ort des Sensors (1) erfasst werden und der Sensor (1) und/oder eine mit dem Sensor (1) zusammenarbeitende Elektronik (3) deaktiviert werden, solange die Vibrationen eine festgelegte Stärke überschreiten, und/oder innerhalb eines festgelegten Frequenzbandes auftreten.

2. Verfahren nach Anspruch 1, **dadurch gekennzeichnet, dass** die mechanischen Vibrationen mittels eines oder mehrerer Beschleunigungssensoren (4,5,6) gemessen werden.

3. Verfahren nach Anspruch 2, **dadurch gekennzeichnet, dass** die Beschleunigungssensoren (4,5,6) in unmittelbarer Nähe des Sensors (1) angeordnet sind.

4. Verfahren nach Anspruch 1 bis 3, **dadurch gekennzeichnet, dass** die Beschleunigungssensoren (4,5,6) verschiedene Bandbreiten und/oder Messrichtungen aufweisen.

5. Verfahren nach Anspruch 4, **dadurch gekennzeichnet, dass** die Bandbreite der Beschleunigungssensoren (4,5,6) zwischen 300 und 450 Hz liegt. ,

6. Verfahren nach einem oder mehreren der Ansprüche 1 bis 5, **dadurch gekennzeichnet, dass** zusätzlich das Gehäuse (10) und/oder die Platine (7) mechanisch so ausgebildet sind, dass sie bei Schwingungs-Anregung nur eine minimale Anzahl eng abgegrenzter Resonanzbereiche ausbilden.

7. Verfahren nach einem oder mehreren der Ansprüche 1 bis 6, **dadurch gekennzeichnet, dass** die Platine (7) in Halterungen (8,9) schwingungsdämpfend gelagert ist.

## Claims

1. Method for operating a sensor (1), in particular a rate-of-rotation sensor, which is installed on a printed circuit board (7) in a housing (10), **characterized in that** mechanical vibrations are detected at the location of the sensor (1), and the sensor (1) and/or electronics (3) which cooperate with the sensor (1) is/are deactivated as long as the vibrations exceed a defined intensity and/or occur within a defined frequency band.

2. Method according to Claim 1, **characterized in that** the mechanical vibrations are measured using one or more acceleration sensors (4, 5, 6).

3. Method according to Claim 2, **characterized in that** the acceleration sensors (4, 5, 6) are arranged in the immediate vicinity of the sensor (1).

4. Method according to Claims 1 to 3, **characterized in that** the acceleration sensors (4, 5, 6) have different bandwidths and/or measuring directions.

5. Method according to Claim 4, **characterized in that** the bandwidth of the acceleration sensors (4, 5, 6) is between 300 and 450 Hz.

6. Method according to one or more of Claims 1 to 5, **characterized in that** the housing (10) and/or the printed circuit board (7) is/are additionally mechanically designed in such a manner that they form only a minimum number of narrowly delineated resonance regions when caused to vibrate.

7. Method according to one or more of Claims 1 to 6, **characterized in that** the printed circuit board (7) is mounted in holders (8, 9) in a vibration-damping manner.

## Revendications

1. Procédé d'utilisation d'un capteur (1), notamment d'un capteur de vitesse de rotation, qui est monté dans un boîtier (10) sur une platine (7), **caractérisé en ce que** des vibrations mécaniques à l'endroit du capteur (1) sont détectées et le capteur (1) et/ou une électronique (3) qui collabore avec le capteur (1) sont désactivés tant que les vibrations dépassent une intensité donnée et/ou se produisent à l'intérieur d'une bande de fréquences donnée.

2. Procédé selon la revendication 1, **caractérisé en ce que** les vibrations mécaniques sont mesurées au moyen d'un ou plusieurs capteurs d'accélération (4, 5, 6).

3. Procédé selon la revendication 2, **caractérisé en ce que** les capteurs d'accélération (4, 5, 6) sont disposés à proximité immédiate du capteur (1).

4. Procédé salon les revendications 1 à 3, **caractérisé en ce que** les capteurs d'accélération (4, 5, 6) présentent des largeurs de bande et/ou des directions de mesure différentes.

5. Procédé selon la revendication 4, **caractérisé en ce que** la largeur de bande des capteurs d'accélération (4, 5, 6) est comprise entre 300 et 450 Hz.

6. Procédé selon l'une ou plusieurs des revendications 1 à 5, **caractérisé en ce que** le boîtier (10) et/ou la platine (7) sont en plus configurés mécaniquement de telle sorte qu'en cas d'excitation vibratoire, ils ne forment qu'un nombre minimum de plages de résonance étroitement délimitées.

7. Procédé selon l'une ou plusieurs des revendications 1 à 6, **caractérisé en ce que** la platine (7) est montée dans des supports (8, 9) avec amortissement des vibrations.
